# EUROPÄISCHE PATENTSCHRIFT

(11) **EP 4 012 212 B1**
(45) Veröffentlichungstag und Bekanntmachung des Hinweises auf die Patenterteilung: **08.11.2023**
(21) Anmeldenummer: 21212265.9
(22) Anmeldetag: 03.12.2021
(51) Int. Cl.: F16C 39/02, F16C 39/00, F16C 35/067, F16C 35/04, F16C 23/08, F16C 19/54, F16C 19/36, F16C 19/16, F03D 80/70

(54) **LAGERGEHÄUSE**
BEARING HOUSING
LOGEMENT DE PALIER

(30) Priorität: 08.12.2020 DE 102020132672
(43) Veröffentlichungstag der Anmeldung: 15.06.2022
(73) Patentinhaber: Aktiebolaget SKF, 415 50 Göteborg (SE)
(72) Erfinder: Baumann, Michael, 97503 Gädheim (DE); Hofmann, Matthias, 97422 Schweinfurt (DE)
(74) Vertreter: Kuhstrebe, Jochen

(56) Entgegenhaltungen:
- EP-A1- 2 372 145
- EP-A2- 2 273 112
- WO-A1-2013/152850
- WO-A1-2013/185768
- DE-U1-202012 011 274

## Beschreibung

Vorliegende Erfindung betrifft ein Lagergehäuse gemäß dem Oberbegriff von Patentanspruch 1.

Fluidströmungskraftwerke, wie beispielsweise Windkraftwerke, Gezeitenkraftwerke und Meeresströmungskraftwerke, umfassen einen Rotor mit einer Blattnabe und Rotorblättern und eine Gondel, in der unter anderem eine Rotorwelle, die durch den Rotor in Rotation versetzt wird, und ein Generator aufgenommen ist, der mittels der Rotation der Rotorwelle angetrieben wird und Strom erzeugt. Der Rotor selbst wird durch die Strömung des Fluids angetrieben, wobei das Fluid Luft oder Wasser sein kann.

Durch die Strömung des Fluids wirken Kräfte und Biegemomente auf die Rotorblätter, die diese über die drehende Blattnabe auf die Rotorwelle und deren Lagerung übertragen. Da je nach Strömungsgeschwindigkeit und -richtung des Fluids starke Kräfte von der Blattnabe und den Rotorblättern auf die Rotorwelle übertragen werden können, ist es notwendig, diese resultierenden Lagerkräfte auf tragendende Strukturen, wie beispielsweise die Gondel, abzuleiten, da lediglich das rotierende Antriebsmoment der Rotorwelle für das nachgeschaltete Getriebe und den Generator für die Energieerzeugung genutzt werden soll.

Das Dokument WO 2013/185768 A1 beschreibt einen Antriebsstrang für eine Windturbine mit einer Hauptwelle, die einen Rotorbefestigungsflansch aufweist, um mit einem Rotor verbunden zu werden, einem Hauptlagergehäuse mit einem Hauptkörper, das über ein erstes Lager und ein zweites Lager die Hauptwelle trägt, wobei das Hauptlagergehäuse einen ersten Sitz für das erste Lager, einen zweiten Sitz für das zweite Lager, und einen Sitzflansch aufweist, der sich von dem Hauptkörper zumindest teilweise radial nach innen erstreckt, wobei sich der zweite Sitz an einem distalen Ende des Sitzflansches befindet, wobei der Sitzflansch wie ein Kegelstumpf geformt ist.

Das Dokument EP 2 273 112 A2 beschreibt einen Antriebsstrang für eine Windkraftanlage, der ein Getriebe mit einem Gehäuse und einer drehbar innerhalb des Gehäuses gekoppelten Ausgangswelle umfasst, wobei das Getriebe mindestens ein Lager umfasst, das zwischen dem Gehäuse und der Ausgangswelle positioniert ist. Ferner ist ein Bremssystem mit dem Getriebe gekoppelt, wobei das Bremssystem eine rotierende Komponente und eine stationäre Komponente enthält. Der Antriebsstrang umfasst weiterhin einen Generator, der einen mit dem Gehäuse gekoppelten Stator, der radial außerhalb des Gehäuses positioniert ist, und einen Rotor umfasst, der so mit der Ausgangswelle gekoppelt ist, dass der Rotor radial innerhalb des Stators positioniert ist, wobei die Getriebeausgangswelle und das mindestens eine Lager das Stützen der Bremssystem-Rotationskomponente erleichtern.

Das Dokument EP 2 372 145 A1 beschreibt eine Windkraftanlage zur Erzeugung elektrischer Energie, die eine Gondel, einen elektrischen Generator mit einem Stator und einem Rotor, eine drehbare Anordnung, die mit der Gondel verbunden ist, um sich um eine Drehachse zu drehen; und ein Lager aufweist, das zwischen der drehbaren Anordnung und der Gondel angeordnet ist. Dabei weist die Gondel einen ersten Sektor auf, der sich am Lager befindet, von der Gondel abnehmbar ist und dazu bestimmt ist, im abgenommenen Zustand eine Öffnung in der Gondel zu bilden, um den Durchgang des Lagers zu ermöglichen.

Das Dokument WO 2013/152850 A1 beschreibt eine Lageranordnung mit einer Einstelleinrichtung, mit der die Lagervorspannung ausgehend von einer Basis-Vorspannung einstellbar ist.

Das Dokument DE 20 2012 011 274 U1 beschreibt eine vorgespannte Lagereinheit mit zwei über ein Lager aneinander gelagerten Bauteilen, wobei das Lager eine Mehrzahl von zwischen zwei Lagerringen angeordneten Wälzkörpern aufweist und ein Klemmring zur Aufbringung einer axialen Lagervorspannung vorgesehen ist, der mit einem der Bauteile über Schrauben befestigt ist, wobei zwischen den Schraubenköpfen oder den Schraubenmuttern und dem Klemmring Hülsen angeordnet sind.

Es ist deshalb eine Aufgabe der vorliegenden Erfindung, ein Lagergehäuse bereitzustellen, das eine optimierte Kraft- und Biegemomentenableitung in tragende Strukturen ermöglicht.

Diese Aufgabe wird durch das Lagergehäuse gemäß Patentanspruch 1 gelöst.

Im Folgenden wird ein Lagergehäuse, das insbesondere als stirnseitige Abdeckung für eine Gondel eines Fluidströmungskraftwerk ausgebildet ist, mit einem zylindrischen Abschnitt, der dazu ausgelegt ist, eine Lagereinheit mit zumindest einem Wälzlager aufzunehmen, vorgeschlagen. Dabei hat das Wälzlager einen Innenring und einen Außenring, die zueinander um eine Lagerdrehachse verdrehbar angeordnet sind. Die Ringe bilden einen Wälzraum, in dem mehrere Wälzkörper angeordnet sind. Die Wälzkörper können außerdem in einem Käfig aufgenommen sein, der sie beabstandet voneinander führt.

Um eine stetige Ableitung der von einem Rotor und seinen Rotorblättern auf das Lagergehäuse übertragenen Kräfte bzw. Biegemomente zu verbessern, weist das Lagergehäuse weiterhin einen sich winklig zu dem zylindrischen Abschnitt erstreckenden Abschnitt auf. Der winklige Abschnitt ist vorzugsweise weiterhin dazu ausgelegt, mit der Gondel des Fluidströmungskraftwerks verbunden zu werden. Um eine optimierte Kraftableitung, insbesondere in Richtung der Gondel zu ermöglichen, ist der Winkel des winkligen Abschnitts an einen Winkel zwischen der Lagerdrehachse und einer Drucklinie des Wälzlagers angepasst ist, so dass eine Kraftableitung in Richtung der Drucklinie des Wälzlagers ermöglicht ist. Dadurch kann eine direkte Kraftableitung, der von dem Wälzlager aufgenommenen Kräfte, in Richtung der Drucklinie in den sich winklig ersteckenden Abschnitt und damit in die mit dem Lagergehäuse verbindbare Gondel erfolgen.

Es ist vorteilhaft, wenn die Konturen des Lagergehäuses, die in Kontakt mit dem Fluid, wie zum Beispiel Luft oder Wasser, kommen können, eine Form aufweisen, die strömungstechnisch optimiert ist. Auch ist es vorteilhaft, Dichtungen vorzusehen, die zum einen verhindern, dass zum Beispiel Schmierfett aus dem Lagergehäuse austritt, und zum anderen verhindern, dass das Fluid über das Lagergehäuse in die Gondel eindringt. Ferner kann das zumindest eine Wälzlager dazu ausgelegt sein, eine Welle, insbesondere eine Rotorwelle, zu lagern, wobei die Welle an einem ersten axialen Ende mit einer Nabe, insbesondere einer Blattnabe, und zumindest einem Rotorblatt verbunden ist und an einem axialen zweiten Ende, das dem ersten axialen Ende gegenüberliegt, mit einem Getriebe verbunden ist.

Bevorzugt ist ein Winkel zwischen dem sich winklig erstreckenden Abschnitt und dem zylindrischen Abschnitt im Wesentlichen gleich dem Winkel zwischen der Drucklinie des Wälzlagers und der Lagerdrehachse. Unter dem Ausdruck "im Wesentlichen gleich" wird insbesondere verstanden, dass sich die Winkel um weniger als 5°Grad unterscheiden. Dadurch kann eine Kraftableitung in den sich winklig zu dem zylindrischen Abschnitt erstreckenden Abschnitt optimiert und die Kraftableitung in den zylindrischen Abschnitt verringert werden.

Dabei erstreckt sich der sich winklig erstreckende Abschnitt in einer Verlängerung der Drucklinie des Wälzlagers radial nach außen. Mit anderen Worten verlängert der sich winklig erstreckende Abschnitt die Drucklinie radial nach außen, so dass die Kraft- und Biegemomentenableitung direkt in den sich winklig erstreckenden Abschnitt erfolgen kann, wodurch die Kraft- und Biegemomentenableitung nach außen und damit in die mit dem Lagergehäuse verbindbare Gondel verbessert wird.

Gemäß einer weiteren Ausführungsform umfasst die Lagereinheit ein zweites Wälzlager, das einen Innenring und einen Außenring hat, die zueinander um eine Lagerdrehachse verdrehbar angeordnet sind. Zwischen dem Innenring und dem Außenring sind wie beim ersten Wälzlager mehrere Wälzkörper angeordnet. Durch das zweite Wälzlager ist die Rotorwelle statisch bestimmt und die radiale und axiale Lagerung verbessert. Dabei ist das zweite Wälzlager derart angeordnet, dass sich seine Drucklinie und die Drucklinie des ersten Wälzlagers radial außen in etwa schneiden. Die beiden Wälzlager sind in einer O-Anordnung mit einem großen Stützweitenabstand auf der Symmetrielinie der Rotorwelle angeordnet. Dies ist insbesondere hinsichtlich der Kippsteifigkeit vorteilhaft.

Vorteilhafterweise ist das erste und/oder das zweite Wälzlager ein Kegelrollenlager. Kegelrollenlager können insbesondere hohe radiale und gleichzeitig axiale Lasten aufnehmen. Im Falle einer Umkehrung der Rotationsrichtung des Rotors, beispielsweise wenn sich eine Strömungsrichtung des Fluids ändert, wodurch sich auch die wirkenden Kräfte umkehren, kann insbesondere Kegelrollenlager in O-Anordnung vorteilhaft sein, da sie die Kräfte von beiden Seiten gleich aufnehmen können. Alternativ können Schrägkugellager und Axialpendelrollenlager in vergleichbarer O-Anordnung eingesetzt werden. Abhängig von dem strömenden Medium bzw. Fluid und damit abhängig von der radialen und axialen Lagerbelastung ergibt sich eine Bandbreite von flachwinkligen oder steilwinkligen Wälzlagern, die zum Einsatz kommen können und die die kegelige Kontur des stirnseitigen Lagergehäuses bestimmen. Unter einem flachwinkligen oder steilwinkligen Wälzlager wird insbesondere ein Wälzlager mit einem Winkel von kleiner 30°, bevorzugt zwischen 12° und 28° verstanden.

Bevorzugt ist der Lagerabstand derart gewählt, dass eine optimale Kippsteifigkeit erreicht wird, wobei vorteilhafterweise eine thermischen Längsausdehnung der Rotorwelle und einer thermischen Lagerausdehnung in der radialen Lagerrichtung individuell in Betracht gezogen wird, um die Gefahr einer Vorspannungszunahme der Lagerung, die beispielsweise zu einem Heißlaufen des Lagers führen kann, oder eines Vorspannungsverlust, bei dem sich beispielsweise die Kraft auf wenige Wälzkörper verteilt, wodurch die Lagerlebensdauer verkürzt werden kann, für den Betriebsfall zu vermeiden.

Bevorzugt erstreckt sich der sich winklig erstreckende Abschnitt bis zum Schnittpunkt der Drucklinien der beiden Wälzlager. Insbesondere kann dadurch eine bessere Kraftableitung erzielt werden, da so die abzuleitenden Kräfte beider Wälzlager zusammen in Richtung der Gondel abgeleitet werden können.

Aufgrund der hohen Radialkräfte und Biegemomente kann es zu einer Verformung und zu einer Materialbelastung des stirnseitigen Lagergehäuses kommen. Ebenso kann es notwendig sein, eine umlaufende, und bestenfalls gleichmäßige Unterstützung an den Lageraußenringen der Wälzlager vorzusehen, um ein Ovalisieren der Lageraußenringe zu vermeiden und den Wälzkörpern eine umlaufend gleichmäßige Belastung zu gewähren. Dazu sind gemäß einer weiteren Ausführungsform mehrere Versteifungsrippen vorgesehen, die jeweils ein freies, von dem zylindrischen Abschnitt abgewandtes Ende des sich winklig erstreckenden Abschnitts und den zylindrischen Abschnitt verbinden. Dadurch kann der sich winklig erstreckende Abschnitt an dem zylindrischen Abschnitt abgestützt werden. Beispielsweise können die Versteifungsrippen umlaufend ausgebildet sein und sich auf der Innen- oder Außenseite des Lagergehäuses befinden. Aufgrund des umströmenden Mediums bzw. Fluids an der Außenseite mit entsprechenden Strömungsverhalten sowie aus optischen Gründen sind die Versteifungsrippen bevorzugt innenseitig vorgesehen.

Bevorzugt ist ein Winkel zwischen dem zylindrischen Abschnitt und einer Versteifungsrippe an einen Winkel zwischen der Lagerdrehachse und der Drucklinie des zweiten Wälzlagers angepasst, so dass eine Kraftableitung in Richtung der Drucklinie des zweiten Wälzlagers ermöglicht ist.

Ferner ist vorteilhafterweise die Anzahl der mehreren Versteifungsrippen geradzahlig, wobei bevorzugt zwischen 8, und 16 Versteifungsrippen vorgesehen sein können. Alternativ kann auch eine ungerade Anzahl von Versteifungsrippen, wie beispielsweise 9 oder 15, gewählt werden. Besonders vorteilhaft ist es, wenn in jedem Quadranten die gleiche Anzahl von Versteifungsrippen vorgesehen ist. Bevorzugt sind die mehreren Versteifungsrippen umfänglich gleich verteilt, um eine gleichmäßigen Kraftableitung zu erreichen. Ferner können die Versteifungsrippen aus Streben oder aus flächigen Segmenten, beispielsweise in einer im Wesentlichen dreieckigen Form, gebildet werden. Um die Stabilität der Versteifungsrippen zu verbessern und ihre Steifigkeit zu erhöhen, kann zumindest eine der mehreren Versteifungsrippen zusätzlich versteift sein. Dies kann beispielsweise über zusätzliche Versteifungselemente, erfolgen.

Um die Versteifungsrippen möglichst nicht punktuell, sondern entlang ihrer gesamten Länge zu belasten, sind die mehreren Versteifungsrippen bevorzugt gekrümmt, insbesondere konkav gekrümmt. Besonders bevorzugt ist dabei eine elliptische Krümmung. Die optimale Form der Versteifungsrippen kann beispielsweise über eine Finite-Elemente-Simulation ermittelt werden. Die Krümmung ermöglicht auch, dass eine in Richtung der Drucklinie der zweiten Lagereinheit gerichtete Kraft entlang der Krümmung geleitet und umgeleitet wird, so dass die Kraftableitung am Übergang zu dem winkligen Abschnitt in Richtung der mit dem Lagergehäuse verbindbaren Gondel erfolgt. Dadurch können beide auf die Lagerwirkenden Kräfte in Richtung der Gondel abgeleitet werden.

Um das Lagergehäuse mit der Gondel oder einem anderen die Kräfte der Hauptwellenlagerung aufnehmenden Bauteil zu verbinden, weist der sich winklig erstreckenden Abschnitt an seinem freien Ende einen Flansch auf. Besonders vorteilhaft ist der Flansch im Bereich des Schnittpunkts der Drucklinien der beiden Wälzlager angeordnet. Dadurch können die wirkenden Kräfte und Momente über den Flansch auf die Gondel bzw. das Bauteil abgeleitet werden, wodurch ein gleichmäßiger stetiger, d.h. geradliniger und ununterbrochener, Kraftfluss auf die Gondel bzw. das Bauteil ermöglicht wird. Der Flansch kann einen Lochkranz aufweisen, über den das Lagergehäuse mit dem Bauteil verschraubt werden kann. Bevorzugt ist ein Durchmesser des Lagergehäuses und insbesondere des Flansches größer als ein Durchmesser des eingebauten Getriebes oder Generators, das mit der Welle verbunden ist, so dass das Lagergehäuse zusammen mit der Welle und dem Getriebe vormontiert werden kann und zusammen an dem Bauteil montiert werden kann. Dadurch kann eine Montage vereinfacht werden.

Ferner kann der Winkel zwischen der Drucklinie des ersten Wälzlagers und der Lagerdrehachse und ein Winkel zwischen der Drucklinie des zweiten Wälzlagers und der Lagerdrehachse verschieden voneinander sein. D. h. die Drucklinien können unterschiedlich steil zu der Lagerdrehachse verlaufen. Dadurch kann insbesondere die Kraftableitung an die auftretenden Kräfte angepasst werden. Alternativ sind die beiden Winkel gleich zu einander. Dadurch können insbesondere die auf das Wälzlager wirkenden Kräfte gleichmäßig verteilt werden.

Weiterhin wird eine Gondel für ein Fluidströmungskraftwerk mit einer Abdeckung vorgeschlagen, wobei die Abdeckung als ein Lagergehäuse wie voranstehend beschrieben ausgebildet ist.

Weitere Vorteile und vorteilhafte Ausführungsformen sind in der Beschreibung, den Zeichnungen und den Ansprüchen angegeben. Dabei sind insbesondere die in der Beschreibung und in den Zeichnungen angegebenen Kombinationen der Merkmale rein exemplarisch, so dass die Merkmale auch einzeln oder anders kombiniert vorliegen können.

Im Folgenden soll die Erfindung anhand von in den Zeichnungen dargestellten Ausführungsbeispielen näher beschrieben werden. Dabei sind die Ausführungsbeispiele und die in den Ausführungsbeispielen gezeigten Kombinationen rein exemplarisch und sollen nicht den Schutzbereich der Erfindung festlegen. Dieser wird allein durch die anhängigen Ansprüche definiert.

Es zeigt:

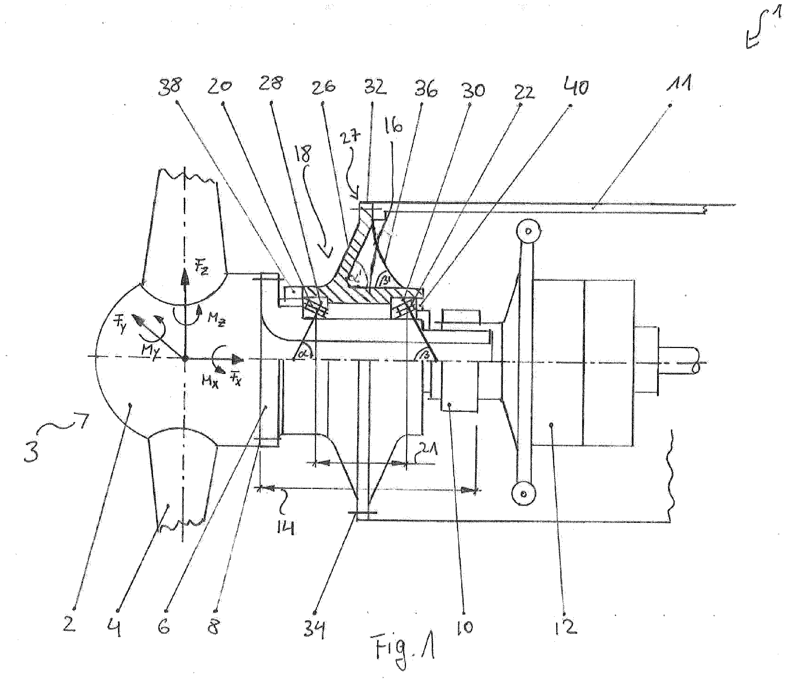

- Fig. 1:: eine partielle Schnittansicht durch ein Fluidströmungskraftwerk mit einem Lagergehäuse gemäß einer Ausführungsform.

Im Folgenden werden gleiche oder funktionell gleichwirkende Elemente mit denselben Bezugszeichen gekennzeichnet.

Fig. 1 zeigt einen partiellen Schnitt durch ein Fluidströmungskraftwerk 1. Das Fluidströmungskraftwerk 1 umfasst einen Rotor 3 mit einer Blattnabe 2, an der mehrere Rotorblätter 4 angeordnet sind. Durch eine Strömung eines Fluids, wie zum Beispiel Wasser oder Luft, wird die Blattnabe 2 über die Rotorblätter 4 in Rotation versetzt, wobei die Rotation auf eine Rotorwelle 6 übertragen wird, wobei resultierende Kräfte Fₓ, F_{y}, F_{z}, Blatt-Biegemomente M_{y}, M_{z} und das Antriebsmoment Mₓ über die Blattnabe 2 auf die Rotorwelle 6 und deren Lagerung übertragen.

Die Rotorwelle 6 kann beispielsweise über eine Verschraubung 8 an der Blattnabe 2 befestigt sein. An dem der Blattnabe 2 gegenüberliegenden Ende der Rotorwelle 6 ist die Rotorwelle 6 über eine Wellenkupplung 10 mit einem Getriebe 12 gekoppelt, das wiederum mit einem Generator (nicht gezeigt) verbunden ist. Dabei stellt die Wellenkupplung 10 die feste Verbindung zwischen der Rotorwelle 6 und dem Getriebe 12 her. Weiterhin hat das Fluidströmungskraftwerk 1 eine Gondel 11, in dem die Rotorwelle 6, die Wellenkupplung 10, das Getriebe 12 und auch der Generator aufgenommen sind.

Um die Gondel 11 abzudecken und gleichzeitig eine Abdeckung für die Lagerung der Rotorwelle 6 auszubilden, ist ein Lagergehäuse 14 vorgesehen, das einen zylindrischen Abschnitt 16 aufweist, der dazu ausgelegt ist, eine Lagereinheit 18 mit einem ersten Wälzlager 20 und einem zweiten Wälzlager 22 zu tragen. Jedes der Wälzlager 20, 22 weist einen Innenring und einen Außenring auf, die zueinander um eine Lagerdrehachse 24 verdrehbar angeordnet sind und zwischen sich einen Wälzraum definieren, in dem mehrere Wälzkörper angeordnet sind. In dem in Figur 1 dargestellten Ausführungsbeispiel sind die Wälzlager Kegelrollenlager und die Wälzkörper Kegelrollen. Kegelrollenlager sind sowohl in axialer als auch radialer Richtung hochbelastbar und deshalb für einen Einsatz in der Wellenlagerung des Rotors bestens geeignet. Selbstverständlich können auch andere Lagerarten, wie beispielsweise Schrägkugellager oder Axialpendelrollenlager in Kombination mit einem zusätzlichen Radiallager zum Einsatz kommen.

Das erste Wälzlager 20 ist an einem der Blattnabe 2 zugewandten Ende des zylindrischen Abschnitts 16 anordnet, wobei seine Druckline 28 einen Winkel α mit der Lagerdrehachse definiert. An dem von der Blattnabe 2 abgewandten Ende des zylindrischen Abschnitts 16 ist einem Abstand 21 das zweite Wälzlager 22 angeordnet, wobei die Drucklinie 30 des zweiten Lagers mit der Lagerdrehachse 24 einen Winkel β definiert. Dabei sind die beiden Wälzlager 20, 22 derart angeordnet, dass sich die Drucklinie 28 des ersten Wälzlagers 20 und die Drucklinie 30 des zweiten Wälzlagers radial außen schneiden. Die der in der Fig. 1 gezeigten Ausführungsbeispiel sind die Winkel α und β betragsmäßig gleich zueinander.

Das Lagergehäuse 14 hat weiterhin einen sich winklig erstreckenden Abschnitt 26. Dabei entspricht der Winkel α' zwischen dem sich winklig erstreckenden Abschnitt 26 und dem zylindrischen Abschnitt 16 im Wesentlichen dem Winkel α zwischen der Lagerdrehachse 24 und der Drucklinie 28 des ersten Wälzlagers 20. Dadurch erstreckt sich der winklig erstreckende Abschnitt 26 entlang der Drucklinie 28 des ersten Wälzlagers 20 radial nach außen.

An der der Blattnabe 2 abgewandten Seite des sich winklig erstreckenden Abschnitts 26 sind mehrere Versteifungsrippen 36 vorgesehen, die ein freies Ende 27 des sich winklig erstreckenden Abschnitt 26 und den zylindrischen Abschnitt 16 verbinden. Die mehreren Versteifungsrippen 36 sind elliptisch gekrümmt, wodurch die Versteifungsrippen 36 auf ihrer gesamten Länge, und nicht nur punktuell, belastet werden. Ferner bildet jede der Versteifungsrippen 36 mit dem zylindrischen Abschnitt 16 einen Winkel β', der im Wesentlichen dem Winkel β zwischen der Drucklinie 30 des zweiten Lagers 22 und der Lagerdrehachse 24 entspricht.

Die Krümmung ermöglicht auch, dass eine gewisse Kraftumleitung erfolgt, so dass auch eine in Richtung der zweiten Drucklinie wirkende Kraft in Richtung der Gondel um- und in die Gondel eingeleitet werden kann.

Wie in Fig. 1 gesehen werden kann, erstreckt sich der sich winklig erstreckende Abschnitt 26 bis zum Schnittpunkt der Drucklinien 28, 30 der beiden Wälzlager 20, 22. Im Bereich des Schnittpunkts der Drucklinien 28, 30 der beiden Wälzlager 20, 22 ist der sich winklige erstreckende Abschnitt 26 mit einem Flansch 32 versehen, mit dem das Lagergehäuse 14 an der Gondel 11 mittels einer Verschraubung 34 verbunden ist. Dadurch können die wirkenden Kräfte und Momente über den Flansch 32 auf die Gondel 11 abgeleitet werden.

Ferner sind an der dem Rotor 3 zugewandten Seite des zylindrischen Abschnitts 16 und an der der der Gondel 11 zugewandten Seite des zylindrischen Abschnitts Dichtungen 38, 40 vorgesehen, die das Lagergehäuse nach außen und zur Gondel 11 hin abdichten.

Zusammenfassend kann ein stetiger Kraftflussverlauf mit einer Einleitung in ein Gehäuse 11 der Turbine durch den sich winklig zu dem zylindrischen Abschnitt 16 erstreckenden Abschnitt 26 erreicht werden. Dazu ist ein Winkel α' des winkligen Abschnitts 26 an den Winkel α zwischen der Lagerdrehachse 24 und der Drucklinie 28 des Wälzlagers 20 angepasst. Dadurch erfolgt die Kraftableitung in Richtung der Drucklinie 28 des Wälzlagers 20 und kann über den Flansch 32 in die Verschraubung 34 mit dem Gehäuse 11 eingeleitet werden. Zusätzlich kann die Kraftableitung durch Versteifungsrippen 36 verbessert werden, deren Winkel β' zu dem zylindrischen Abschnitt 16 an den Winkel β zwischen der Drucklinie 30 des zweiten Wälzlagers 22 und der Lagerdrehachse 24 angepasst ist. Diese Versteifungsrippen stützen zum einen den winkligen Abschnitt 26 ab und ermöglichen gleichzeitig eine Kraftableitung der auf das zweite Wälzlager wirkenden Kräfte in Richtung der Gondel. Dazu sind die Versteifungsrippen bevorzugt konkav gekrümmt, wobei die Krümmung insbesondere elliptisch ausgebildet ist.

### Bezugszeichenliste

- 1: Fluidströmungskraftwerk
- 2: Blattnabe
- 3: Rotor
- 4: Rotorblatt
- 6: Rotorwelle
- 8: Verschraubung
- 10: Wellenkupplung
- 11: Gondel
- 12: Getriebe
- 14: Lagergehäuse
- 16: zylindrischer Abschnitt
- 18: Lagereinheit
- 20,22: Wälzlager
- 21: Lagerabstand
- 24: Lagerdrehachse
- 26: winkliger Abschnitt
- 27: freies Ende des winkligen Abschnitts
- 28, 30: Drucklinie
- 32: Flansch
- 34: Verschraubung
- 36: Versteifungsrippen
- 38,40: Dichtung
- α, α', β, β': Winkel
- Fₓ, F_{y}, F_{z}: Kräfte
- Mₓ, M_{y}, M_{z}: Biegemomente

## Patentansprüche

1. Lagergehäuse (14), das insbesondere als stirnseitige Abdeckung für eine Gondel eines Fluidströmungskraftwerk ausgebildet ist, mit einem zylindrischen Abschnitt (16), der dazu ausgelegt ist, eine Lagereinheit (14) mit zumindest einem Wälzlager (20) aufzunehmen, wobei das mindestens eine Wälzlager (20) einen Innenring und einen Außenring aufweist, die zueinander um eine Lagerdrehachse (24) verdrehbar angeordnet sind und zwischen sich einen Wälzraum definieren, in dem mehrere Wälzkörper angeordnet sind, wobei das Lagergehäuse (14) weiterhin einen sich winklig zu dem zylindrischen Abschnitt (16) erstreckenden Abschnitt (26) aufweist, der an einen Winkel (α) zwischen der Lagerdrehachse (24) und einer Drucklinie (28) des Wälzlagers (20) angepasst ist, wobei sich der sich winklig zu dem zylindrischen Abschnitt erstreckenden Abschnitt (26) in einer Verlängerung der Drucklinie (28) des Wälzlagers (20) radial nach außen erstreckt, **dadurch gekennzeichnet, dass** der Abschnitt (26) an seinem freien Ende (27) einen Flansch (32) aufweist.

2. Lagergehäuse gemäß Anspruch 1, wobei ein Winkel (α') zwischen dem sich winklig zu dem zylindrischen Abschnitt (16) erstreckenden Abschnitt (26) und dem zylindrischen Abschnitt (16) im Wesentlichen gleich zu einem Winkel (α) zwischen der Drucklinie (28) des Wälzlagers (20) und der Lagerdrehachse (24) ist.

3. Lagergehäuse gemäß einem der vorherigen Ansprüche, wobei die Lagereinheit (14) ein zweites Wälzlager (22) aufweist, das einen Innenring und einen Außenring aufweist, die zueinander um eine Lagerdrehachse (24) verdrehbar angeordnet sind und zwischen sich einen Wälzraum definieren, in dem mehrere Wälzkörper angeordnet sind, und wobei das zweite Wälzlager (22) derart angeordnet ist, dass sich seine Drucklinie (30) und die Drucklinie (28) des ersten Wälzlagers (20) radial außen schneiden.

4. Lagergehäuse gemäß Anspruch 3, wobei sich der sich winklig zu dem zylindrischen Abschnitt erstreckenden Abschnitt (26) bis zum Schnittpunkt der Drucklinien (28, 30) der beiden Wälzlager (20, 22) erstreckt.

5. Lagergehäuse gemäß einem der vorherigen Ansprüche, wobei zumindest eine, vorzugsweise mehrere, Versteifungsrippen (36) vorgesehen sind, die jeweils das freie von dem zylindrischen Abschnitt (16) abgewandtes Ende (27) des sich winklig erstreckenden Abschnitts (26) und den zylindrischen Abschnitt (16) verbinden.

6. Lagergehäuse gemäß Anspruch 5, wobei ein Winkel (β') zwischen dem zylindrischen Abschnitt (16) und einer Versteifungsrippe (36) an einen Winkel (β) zwischen der Lagerdrehachse (24) und der Drucklinie (30) des zweiten Wälzlagers (22) angepasst ist, und so eine Kraftableitung in Richtung der Drucklinie (30) des zweiten Wälzlagers (22) ermöglicht.

7. Lagergehäuse gemäß Anspruch 5 oder 6, wobei die mehreren Versteifungsrippen (36) gekrümmt, insbesondere konkav gekrümmt, sind.

8. Lagergehäuse nach Anspruch 7, wobei die Krümmung elliptisch ist.

9. Lagergehäuse gemäß einem der Ansprüche 5 bis 8, wobei zumindest eine der mehreren Versteifungsrippen (36) versteift ist.

10. Gondel für ein Fluidströmungskraftwerk mit einer Abdeckung, wobei die Abdeckung als ein Lagergehäuse gemäß einem der vorherigen Ansprüche ausgebildet ist.

## Claims

1. Bearing housing (14), designed in particular as an end-face cover for a nacelle of a fluid-flow power plant, having a cylindrical section (16) which is configured to receive a bearing unit (14) with at least one rolling bearing (20), wherein the at least one rolling bearing (20) has an inner ring and an outer ring which are arranged so as to be rotatable about a bearing axis of rotation (24) in relation to one another and, between them, define a rolling space in which multiple rolling bodies are arranged, wherein the bearing housing (14) furthermore has a section (26) which extends at an angle to the cylindrical section (16) and which is adapted to an angle (α) between the bearing axis of rotation (24) and a pressure line (28) of the rolling bearing (20), wherein the section (26) extending at an angle to the cylindrical section extends in an extension of the pressure line (28) of the rolling bearing (20) radially outwards, **characterized in that** the section (26) has a flange (32) at its free end (27).

2. Bearing housing according to Claim 1, wherein an angle (α') between the section (26) extending at an angle to the cylindrical section (16) and the cylindrical section (16) is substantially equal to an angle (α) between the pressure line (28) of the rolling bearing (20) and the bearing axis of rotation (24).

3. Bearing housing according to either of the preceding claims, wherein the bearing unit (14) has a second rolling bearing (22), which has an inner ring and an outer ring which are arranged so as to be rotatable about a bearing axis of rotation (24) in relation to one another and, between them, define a rolling space in which multiple rolling bodies are arranged, and wherein the second rolling bearing (22) is arranged in such a way that its pressure line (30) and the pressure line (28) of the first rolling bearing (20) intersect radially at the outside.

4. Bearing housing according to Claim 3, wherein the section (26) extending at an angle to the cylindrical section extends as far as the point of intersection of the pressure lines (28, 30) of the two rolling bearings (20, 22).

5. Bearing housing according to one of the preceding claims, wherein provision is made of at least one, preferably multiple, stiffening ribs (36), each of which connects the free end (27), remote from the cylindrical section (16), of the section (26) extending at an angle and the cylindrical section (16).

6. Bearing housing according to Claim 5, wherein an angle (β') between the cylindrical section (16) and a stiffening rib (36) is adapted to an angle (β) between the bearing axis of rotation (24) and the pressure line (30) of the second rolling bearing (22), and thereby allows force dissipation in the direction of the pressure line (30) of the second rolling bearing (22).

7. Bearing housing according to Claim 5 or 6, wherein the multiple stiffening ribs (36) are curved, in particular concavely curved.

8. Bearing housing according to Claim 7, wherein the curvature is elliptical.

9. Bearing housing according to one of Claims 5 to 8, wherein at least one of the multiple stiffening ribs (36) is stiffened.

10. Nacelle for a fluid-flow power plant having a cover, wherein the cover is designed as a bearing housing according to one of the preceding claims.

## Revendications

1. Logement de palier (14), notamment configuré sous forme de couvercle frontal pour une nacelle d'une centrale électrique à écoulement de fluide, avec une section cylindrique (16) conçue pour recevoir une unité de palier (14) avec au moins un palier à roulement (20), l'au moins un palier à roulement (20) présentant une bague intérieure et une bague extérieure qui sont agencées de manière à pouvoir tourner l'une par rapport à l'autre autour d'un axe de rotation de palier (24) et qui définissent entre elles un espace de roulement dans lequel plusieurs corps de roulement sont agencés, le logement de palier (14) présentant en outre une section (26) s'étendant de manière angulaire par rapport à la section cylindrique (16), qui est adaptée à un angle (α) entre l'axe de rotation de palier (24) et une ligne de pression (28) du palier à roulement (20), la section (26) qui s'étend de manière angulaire par rapport à la section cylindrique s'étendant radialement vers l'extérieur dans un prolongement de la ligne de pression (28) du palier à roulement (20), **caractérisé en ce que** la section (26) présente une bride (32) à son extrémité libre (27).

2. Logement de palier selon la revendication 1, dans lequel un angle (α') entre la section (26) s'étendant de manière angulaire par rapport à la section cylindrique (16) et la section cylindrique (16) est essentiellement égal à un angle (α) entre la ligne de pression (28) du palier à roulement (20) et l'axe de rotation de palier (24) .

3. Logement de palier selon l'une quelconque des revendications précédentes, dans lequel l'unité de palier (14) présente un deuxième palier à roulement (22) qui présente une bague intérieure et une bague extérieure qui sont agencées de manière à pouvoir tourner l'une par rapport à l'autre autour d'un axe de rotation de palier (24) et qui définissent entre elles un espace de roulement dans lequel plusieurs corps de roulement sont agencés, et dans lequel le deuxième palier à roulement (22) est agencé de telle sorte que sa ligne de pression (30) et la ligne de pression (28) du premier palier à roulement (20) se coupent radialement à l'extérieur.

4. Logement de palier selon la revendication 3, dans lequel la section (26) qui s'étend de manière angulaire par rapport à la section cylindrique s'étend jusqu'au point d'intersection des lignes de pression (28, 30) des deux paliers à roulement (20, 22).

5. Logement de palier selon l'une quelconque des revendications précédentes, dans lequel au moins une, de préférence plusieurs, nervures de renforcement (36) sont prévues, qui relient respectivement l'extrémité libre (27) de la section (26) s'étendant de manière angulaire, détournée de la section cylindrique (16), et la section cylindrique (16).

6. Logement de palier selon la revendication 5, dans lequel un angle (β') entre la section cylindrique (16) et une nervure de renforcement (36) est adapté à un angle (β) entre l'axe de rotation de palier (24) et la ligne de pression (30) du deuxième palier à roulement (22), et permet ainsi une dérivation de la force en direction de la ligne de pression (30) du deuxième palier à roulement (22) .

7. Logement de palier selon la revendication 5 ou 6, dans lequel les plusieurs nervures de renforcement (36) sont courbées, notamment courbées de manière concave.

8. Logement de palier selon la revendication 7, dans lequel la courbure est elliptique.

9. Logement de palier selon l'une quelconque des revendications 5 à 8, dans lequel au moins l'une des plusieurs nervures de renforcement (36) est raidie.

10. Nacelle pour une centrale électrique à écoulement de fluide avec un couvercle, dans laquelle le couvercle est configuré sous la forme d'un logement de palier selon l'une quelconque des revendications précédentes.
